# EUROPEAN PATENT APPLICATION

(11) **EP 3 722 269 A1**
(43) Date of publication of application: **14.10.2020**
(21) Application number: 20168083.2
(22) Date of filing: 03.04.2020
(51) Int. Cl.: C04B 28/02

(54) **CONGLOMERATE FOR BUILDING CONSTRUCTION**

(30) Priority: 05.04.2019 IT 201900005190; 31.03.2020 IT 202000006790
(71) Applicant: Tosi, Cesare, 40051 Malalbergo (BO) (IT)
(72) Inventor: Tosi, Cesare, 40051 Malalbergo (BO) (IT)
(74) Representative: Conti, Marco

(57) **Abstract**

A cementitious conglomerate (10) for building construction (concrete or cementitious mortar) comprises: water (12); a binder (11) configured to be bound with the water (12); an aggregate (13) including a plurality of grains (13') of an inert ceramic material.

## Description

This invention relates to a conglomerate for building construction and to a method for making it.

This disclosure also relates to a method for making a filler material for a composite. The composite may be a cementitious conglomerate. The disclosure also relates to a cementitious conglomerate comprising the filler material.

In the field of building construction, concrete is widely used as a construction material. Concrete is a cementitious conglomerate formed from a hydraulic binder, normally cement, water and a certain amount of inert aggregates. The aggregates do not take part in the reaction which causes the concrete to set but play a decisive role in determining the strength properties of the material. More specifically, the quality and quantity of the aggregates may determine several parameters, including the compression strength of the concrete.

In the sector of concrete manufacturing, materials such as glass or foundry waste may be used as aggregates in the cementitious conglomerate. These materials, however, do not provide the required compromise between the specific weight of the concrete and its mechanical properties. The heaviness of the materials used in building construction has several disadvantages, including the need to oversize the structures. In the field of construction material manufacturing, there is a growing demand for concrete with lower and lower specific weight but with the same guaranteed mechanical properties.

Besides the aggregate and the binder, a filler material (commonly termed "filler" for short), with a very small grain size, is usually added as well; this filler material constitutes a mineral filler in the composite (according to the EN 206 standard).

This filler material contributes to modifying, and improving, the physical and chemical properties of the final material.

In the sector of cementitious conglomerates, mineral fillers obtained, for example, from waste and dust derived from the combustion of coal are known to be used for the preparation of the conglomerates. Other filler materials are obtained by recovering dust from rock quarries. Filler materials of calcareous origin also belong to this category.

These materials, however, are obtained from invasive actions with a high environmental impact. Moreover, there is an increasing market demand for filler materials capable of offering high performance in terms of chemical and physical parameters and thus of contributing to producing a high-quality concrete or asphalt.

These filler materials are also used in other industrial sectors such as those for the production of varnishes, paints, glues and adhesives. The need is therefore felt for a filler material that is applicable flexibly to diverse sectors and that is not harmful to human health.

Prior art solutions are described, for example, in patents EP2385028B1 and EP2620420B1, where ceramic tiles are recycled in the form of post-consumer waste material for the production of a ceramic aggregate in cementitious and bituminous conglomerates. This ceramic material, however, includes a single, large grain-size fraction. Furthermore, being a recycled material, the aggregate also includes non-inert particles which can negatively affect the chemical, physical and mechanical properties of the final product and which are unable to ensure repeatability in terms of performance.

The aim of this invention is to provide a conglomerate that overcomes the above mentioned disadvantages of the prior art.

This aim is fully achieved by the conglomerate and the method for making, as described in this disclosure and as characterized in the appended claims.

According to an aspect of it, this disclosure provides a conglomerate for civil buildings.

The conglomerate comprises a binder and an aggregate.

In an embodiment, the conglomerate comprises one or more additives, preferably chemical additives. For example, but not necessarily, the additives may be fluidizers of an acrylic nature.

The aggregate comprises a plurality of grains of an inert material. According to an aspect of the disclosure, the inert material is a ceramic material. Preferably, the aggregate is based on grains of ceramic material (or material of a ceramic nature).

In an embodiment, the conglomerate is a cementitious conglomerate (concrete or cement mortar). In this embodiment, the cementitious conglomerate comprises water; the binder (cement or a cementitious composite) is configured to bind with water.

In another possible embodiment, the binder is bitumen. In the case where the binder is bitumen, the conglomerate for building construction is asphalt.

In other possible embodiments, the binder may be another material: for example, a polymeric material, a resin or an organic binder.

The disclosure is set out below with reference in particular to its application to cementitious conglomerates but without thereby limiting its scope; that is to say, the features described below may also refer to the other applications mentioned above.

In an embodiment, the inert material is a fired ceramic material.

In an embodiment, the inert material is stoneware. In other embodiments, however, the inert material may also be majolica and/or terracotta and/or porcelain and/or earthenware.

In an embodiment, the conglomerate may comprise further aggregate elements in addition to the ceramic aggregates. More specifically, the conglomerate might comprise natural aggregate material. In an embodiment, the aggregate comprises both natural aggregate (for example, sand or gravel) and the plurality of grains of ceramic material. Thus, in an embodiment, the aggregate might include, in addition to the plurality of grains of ceramic material, a further plurality of grains (mixed with the plurality of ceramic grains) of a natural material (such as sand or crushed stone or any other material of natural origin).

In an embodiment, the aggregate comprises only the plurality of ceramic grains.

In an embodiment, for example, the natural aggregate might constitute 50% to 60% of the total aggregate, while the rest might consist of aggregate of a ceramic nature.

It should be noted that in this disclosure the term "grain size" is used to mean the diameter of the plurality of grains.

In an embodiment, the plurality of grains includes a first group of grains. The first group of grains has a first grain size. In an embodiment, the plurality of grains includes a second group of grains. The second group of grains has a second grain size.

In a preferred embodiment, therefore, the plurality of grains does not have a single grain-size fraction but at least two distinct grain sizes calibrated for predetermined purposes.

In an embodiment, the further aggregate elements may have a grain size which is included in the first grain size and/or in the second grain size.

The first grain size is identified by a range of diameters that the grains belonging to the first group of grains may have. The second grain size is identified by a range of diameters that the grains belonging to the second group of grains may have.

The first and the second group of grains (according to the first and the second grain size, or a first and a second granulometric curve) may each respectively include: (i) only grains of the plurality of ceramic grains or (ii) only grains of the further plurality of grains of natural material or (iii) a combination of grains of the two pluralities (ceramic and natural).

In an embodiment, the second grain size is larger than the first grain size.

In an embodiment, the first group of grains is ceramic sand and the second group of grains is crushed ceramic ware.

In an embodiment, the first grain size is less than 6 mm. In an embodiment, the second grain size is between 6 mm and 16 mm. In an embodiment, the first grain size is less than 4 mm. In an embodiment, the first grain size is between 0 mm and 4 mm.

It should be noted that the size of the grains is verified by sieving. More specifically, verifying that the content of the first group of grains has a grain size of less than 6 mm can be carried out by passing it through a first, 6 mm sieve (having a mesh size of diameter - equivalent diameter - equal to 6 mm) and checking that 100% of the grains of the first group of grains pass through (percentage retained on the sieve is 0). In the same way, to verify that the second grain size is between 6 mm and 16 mm, it is necessary to pass the second group of grains through a 6 mm sieve to check that the percentage of the grains that pass through is 0 and to then pass the second group of grains through a 16 mm sieve to check that the percentage of the grains that pass through is 100%.

In an embodiment, the first group of grains has a first absorption coefficient. In an embodiment, the second group of grains has a second absorption coefficient. In an embodiment, the second absorption coefficient is less than the first absorption coefficient.

In an embodiment, the first absorption coefficient is greater than 0.90%. In an embodiment, the second absorption coefficient is greater than 0.65%. In an embodiment, the first absorption coefficient is 0.98%. In an embodiment, the second absorption coefficient is 0.72%.

It is specified that the absorption coefficient represents the absorption of water by the material.

In an embodiment, the first group of grains has a density of its own and the second group of grains has a density of its own. In an embodiment, the density of the first group of grains is greater than the density of the second group of grains. In an embodiment, the density of the first group of grains is 2.35 ton/m³, Mg/m³. In an embodiment, the density of the second group of grains is 2.34 ton/m³, Mg/m³. It is important to observe that measuring the density is performed under certain physical conditions of the grains, namely saturated-surface-dry (SSD). This allows standardizing the measurement values.

In an embodiment, the grains of the plurality of grains are obtained from crushed tiles or other semi finished ceramic products. In an embodiment, the grains of the plurality of grains derived from crushed tiles are rounded.

According to an aspect of it, this disclosure also provides a use of ceramic tiles or semi finished tiles as inert aggregate material in agglomerated composites for building construction. In an embodiment, the tiles used are of stoneware.

According to an aspect of it, this disclosure provides a method for making a cementitious conglomerate (or premixed cementitious composite) for building construction. The method comprises a step of grinding. In the step of grinding, ceramic products (subjected to or derived from heat treatments) are ground down to obtain a plurality of grains. More specifically, the plurality of grains is obtained by grinding tiles or semi finished tiles, derived from industrial processes for the production of ceramic tiles. The plurality of grains forms the aggregate for the cementitious conglomerate.

The method comprises a step of mixing the aggregate comprising the plurality of grains with water and with a binder. In an embodiment, in the step of grinding, stoneware tiles are ground. In an embodiment, in the step of grinding, tiles (or semi finished tiles) are subjected to grinding before being installed or used as cladding (pre-consumer waste). In other words, preferably, the ground tiles are not derived from recycled building waste (post-consumer waste) but are semi finished materials derived directly from the industrial production process.

The fact that the tiles are not derived from post-consumer waste or recycled material is very important because it means the aggregate is pure and does not contain other materials which could negatively affect the mechanical, physical and/or chemical properties provided by the use of the ceramic material. Since tiles come into contact with other materials - for example when they are installed - using recycled materials would mean including residues of cement, mortar, stucco or other composites which are harmful to the quality of the conglomerate and which, moreover, would prevent the material from being further recycled at the end of the product life cycle.

In an embodiment, the step of grinding comprises a first step of grinding. In the first step of grinding, the tiles are ground down to form a first group of grains having a first grain size. In an embodiment, the step of grinding comprises a second step of grinding. In the second step of grinding, the tiles are ground down to form a second group of grains having a second grain size. In an embodiment of the method, the first and the second group of grains are ground down to obtain a second grain size, greater (or smaller) than the first grain size.

In an embodiment, the method comprises a step of rounding. In the step of rounding, the edges of the grains of the plurality of grains are rounded. In an embodiment, the step of rounding is a step of tumbling. Tumbling is a surface finishing machine process which allows removing sharp edges, rounding and eliminating any surface roughness from the material subjected to the process, thereby allowing the filler to be recovered.

According to one aspect of it, this disclosure provides a method for making a filler material for a composite (or conglomerate) using sludge from the processing of tiles.

The method comprises a step of collecting the waste sludge.

The method comprises a step of dehydrating the waste sludge to obtain a filler material.

In an embodiment, the method comprises a step of filtering, in which a mixture of tile dust and water derived from the cutting of the ceramic material is filtered, preferably through a filter press, to obtain the waste sludge. In other words, the sludge is obtained through a filter press (FP) which processes a mixture of tile dust and water derived from the cutting of the ceramic material.

In an embodiment, the step of dehydrating is a step of drying. The step of drying is preferably accomplished by exposing the sludge to (keeping the sludge in) an environment at a temperature above 80°C, preferably between 100°C and 105°C.

In an embodiment, the drying temperature is greater than or equal to 30°C. In such a case, the drying time is equal to a first predetermined length of time. In an embodiment, the drying temperature is greater than or equal to 80°C. In such a case, the drying time is equal to a second predetermined length of time, less than the first predetermined length of time. The drying temperature is therefore inversely proportional to the drying time.

In an embodiment, in the step of drying, the sludge is exposed to a forced air flow according to a predetermined ventilation programme.

In an example embodiment, the method comprises a step of grinding. In the step of grinding, the dried sludge is ground down to a grain size of less than 2 mm.

In an embodiment, the method comprises a step of sieving. In the step of sieving, the dehydrated sludge is sieved to remove any grains greater in size than a predetermined grain size. In an embodiment, the conglomerate is a cementitious conglomerate for building construction.

According to one aspect of it, this disclosure is intended to protect a use of sludge derived from the processing of ceramic tiles to form a filler material in a composite (or a conglomerate).

The use may also be directed to the production of a filler material in a cementitious conglomerate for building construction, or a bituminous conglomerate or a composite (preparation) for varnishes, lacquers, enamels, paints, glues or stuccoes.

According to an aspect of it, this disclosure provides a cementitious conglomerate for building construction. The conglomerate comprises water. The conglomerate comprises a binder configured to be bound with the water. The conglomerate comprises an aggregate of an inert material.

In an embodiment, the composite (conglomerate) comprises one or more chemical additives.

The conglomerate comprises a filler. The filler includes a plurality of grains of a filler material. In an embodiment, the plurality of grains of the filler material has a grain size of less than 2 mm. Preferably, the plurality of grains of the filler material has a grain size of less than 1.5 mm. Preferably, the plurality of grains of the filler material has a grain size of less than 0.125 mm. Preferably, the plurality of grains of the filler material has a grain size of less than 0.063 mm.

In an embodiment, the filler material is a ceramic material, preferably a fired ceramic material.

In an embodiment, the plurality of grains includes a first group of grains. The first group of grains has a respective first grain size which is less than 0.063 mm. In an embodiment, the plurality of grains includes a second group of grains. The second group of grains has a respective second grain size which is between 0.063 mm and 2 mm.

In an embodiment, the grain size of the plurality of grains of the filler material is less than 1.5 mm.

In an embodiment, the filler material has a density which is less than or equal to 3 Mg/m³, preferably less than or equal to 2.8 Mg/m³, and still more preferably, less than 2.6 Mg/m³.

According to an aspect of this disclosure, the grains of the plurality of grains of the filler material are made from ceramic tile process waste material.

According to an aspect of it, this disclosure provides a premixed cementitious composite for building construction.

The premixed composite includes a binder configured to be bound with water. The premixed composite includes an aggregate of an inert material. In an embodiment, the premixed composite includes one or more chemical additives. The premixed composite includes a filler, including plurality of grains of a filler material. The plurality of grains of the filler material has a grain size not greater than 2 mm.

The filler material is a ceramic material.

It should be noted that in addition to the advantages already mentioned, the conglomerate of this disclosure provides the following additional advantages:
- enhanced mechanical performance of the cementitious conglomerate (due to the extremely reduced water absorption and the high affinity between the aggregate and the cementitious matrix); more generally speaking, all the mechanical and physical properties of the cementitious composites are clearly improved;
- enhanced mechanical performance of the cementitious matrix (due to improvement of the latent hydraulicity);
- significantly reduced weight, owing to the lighter density (it was possible to make cementitious conglomerates with a density of 2000 - 2200 Kg/m³ and Rck 50 MPa.) with consequent reduction in the weight of the structures on account not only of the lower density but also of the reduced sections;
- possibility of developing self-consolidating cementitious conglomerates SCC (the development of these conglomerates was made possible by the use of the filler material, which allowed obtaining a correct rheology of the conglomerate without altering the ratio between the aggregate and the binder);
- easier installation (thanks to the use of aggregates with a reduced maximum diameter without adversely affecting the ratio between the aggregate and the binder);
- optimized development of mechanical strength within 28 days (allowing rational management of the resources for the production of the structures - that is to say, optimized scheduling of the casting and form dismantling stages);
- total elimination of reactions between alkalis and aggregate (the repeatable, uniform composition of the aggregate is a safeguard against the risk of reactivity, since the provenance of the material, in the sense of its nature, is always the same);
- eco-sustainability (the aggregate used does not subtract any resource from the environment and, at the end of the life cycle of the structure, can be fully recycled in new applications).

These and other features will become more apparent from the following detailed description of a preferred, non-limiting embodiment, illustrated by way of example in the accompanying drawings, in which:

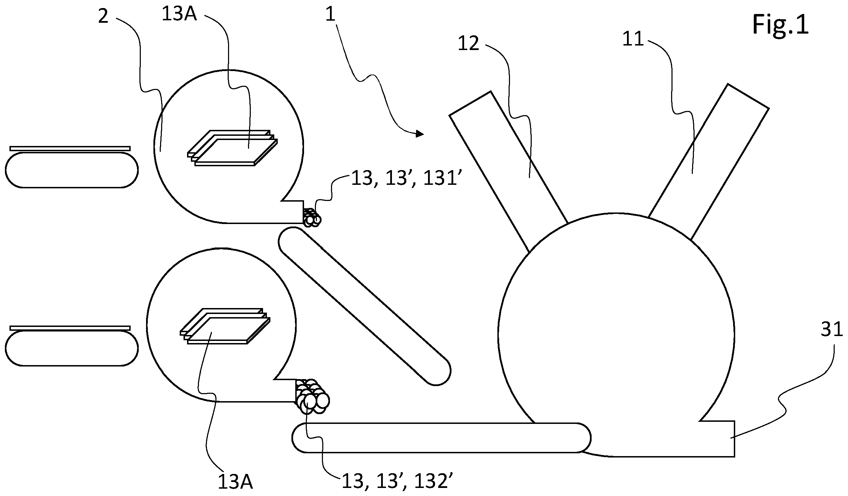

- Figure 1 schematically illustrates an apparatus for the production of a cementitious conglomerate for building construction;
- Figure 2 schematically illustrates a first and a second granulometric curve of a ceramic sand and of crushed ceramic ware, respectively;

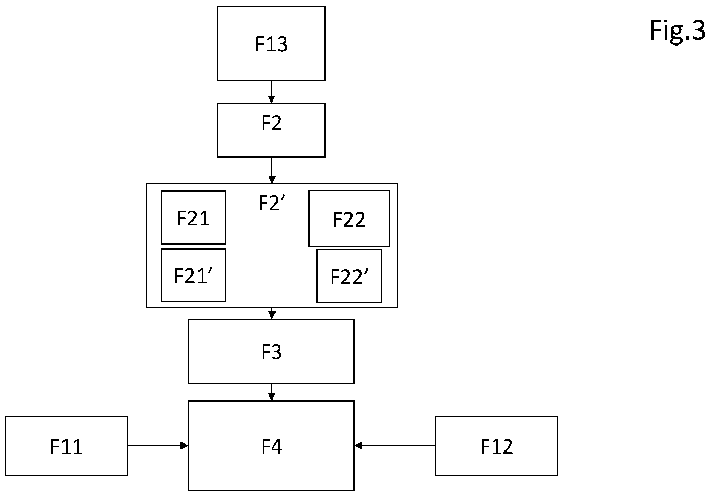

- Figure 3 is a block diagram schematically representing the steps of a method for making a cementitious conglomerate for building construction;

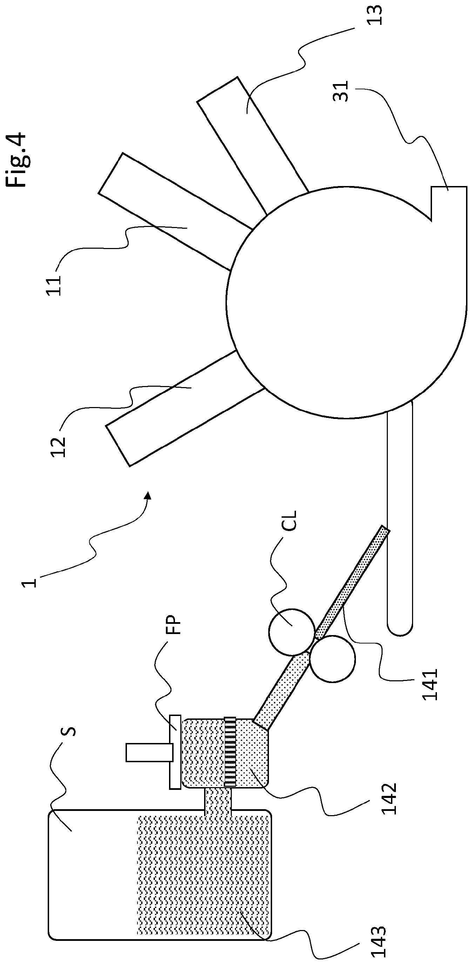

- Figure 4 schematically illustrates an apparatus for the production of a cementitious conglomerate;

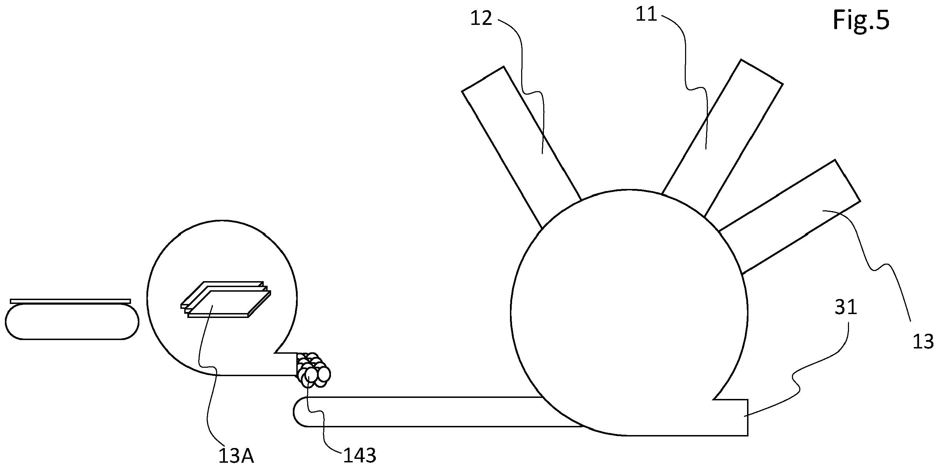

- Figure 5 illustrates an embodiment of the apparatus of Figure 4;

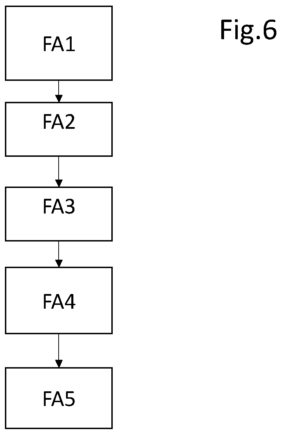

- Figure 6 illustrates the steps of a method for the production of a filler material for a cementitious conglomerate;

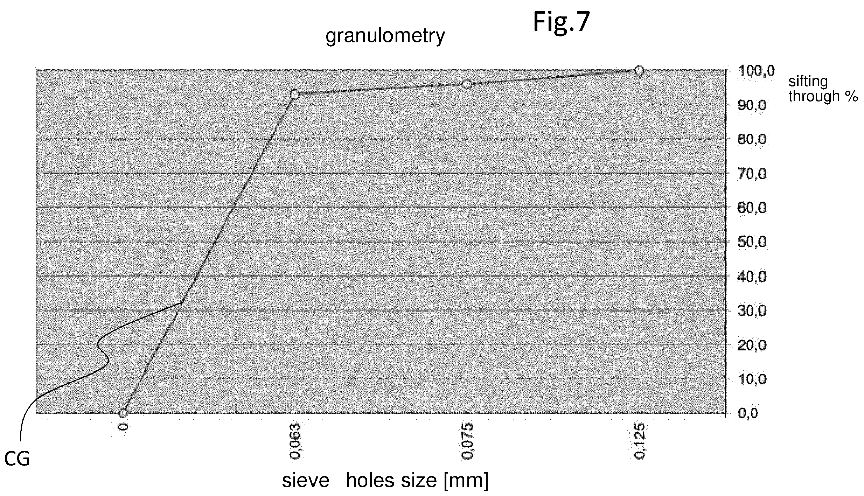

- Figure 7 shows a graph of the grain size of a filler material according to this disclosure.

In effect, this disclosure provides both a cementitious conglomerate 10 for building construction and an apparatus 1 for making the cementitious conglomerate 10.

The cementitious conglomerate 10 includes a binder 11. In an embodiment, the binder 11 is cement. The cementitious conglomerate 10 includes water 12. The cementitious conglomerate 10 comprises an aggregate 13. In an embodiment, the aggregate 13 comprises a plurality of grains 13'.

In an embodiment, the aggregate 13 includes ceramic material. In an embodiment, the aggregate 13 includes fired ceramic material. In an embodiment, the aggregate 13 includes stoneware. In an embodiment, the aggregate 13 includes fired ceramic material derived from ceramic tiles 13A. In an embodiment, the aggregate 13 includes fired ceramic material derived from ceramic stoneware tiles 13A.

In an embodiment, the plurality of grains 13' includes a group of grains 131' and a second group of grains 132'.

The first group of grains 131' forms a sand. In an embodiment, the first group of grains 131' forms a ceramic sand.

In an embodiment, the first group of grains 131' may be characterized by one or more of the following parameters:
- grain size (denoted in this disclosure also by the term "first grain size) less than 6 mm;
- equivalent sand value greater than 70%;
- density equal to 2.35 SSD;
- water absorption equal to 0.98%;
- BLUE value (methylene blue test to determine the clay content) less than 0.3 g/kg or less than 0.4 g/kg or less than 0.6 g/kg;
- sulphate value less than 0.02%;
- passing fraction at 63 µm less than 4% or less than 3%.

In an embodiment, the second group of grains 132' may be characterized by one or more of the following parameters:
- grain size (denoted in this disclosure also by the term "first grain size") between 6 and 16 mm;
- density equal to 2.34 SSD;
- water absorption equal to 0.72%;
- sulphate value less than 0.02%;
- flakiness coefficient Fl (933-3) equal to 16 or less than 20;
- shape index SI (933-4) equal to 9 or less than 20;
- Los Angeles (LA) coefficient, or fragmentation test, less than or equal to 30.

For further specifications on the definition of the above mentioned parameters, for their measurement on samples, for the conditions under which the measurements are performed and for the units of measurement involves, express reference is made to the standards below.

Below are the normative references with regard to the parameters of the aggregate material:
- determination of grain size distribution (UNI EN 933-1);
- determination of particle density (UNI EN 1097-6);
- determination of water absorption (UNI EN 1097-6);
- fines quality assessment - sand equivalent test (UNI EN 933-8);
- fines quality assessment - methylene blue test (UNI EN 933-9);
- determination of particle shape - flakiness index (UNI EN 933-3);
- determination of particle shape - shape index (UNI EN 933-4);
- determination of resistance to fragmentation through the Los Angeles test method (UNI EN 1097-2);
- determination of water-soluble chlorides (UNI EN 1744-1). In an embodiment, the percentage of water-soluble chlorides is less than or equal to 0.01%.
- determination of acid soluble sulphates (UNI EN 1744-1);
- determination of resistance to freezing and thawing (UNI EN 1367-1).

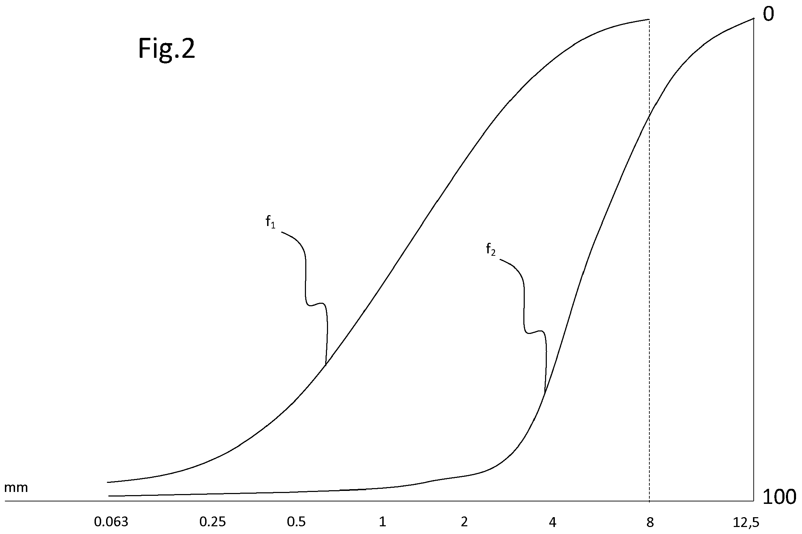

In an embodiment, the first group of grains 131' has a granulometric curve represented in Figure 2, labelled f₁. In an embodiment, the second group of grains 132' has a granulometric curve represented in Figure 2, labelled f₂.

It should be noted that the functions f₁ and f₂ illustrate the percentage trend of the grains retained on the sieve as a function of the sieve mesh diameter.

In an embodiment, 100% of the grains of the first group of grains 131' pass through a 4 mm diameter sieve or a 6 mm diameter sieve.

In an embodiment, the percentage of grains of the first group of grains 131' that pass through a 4 mm sieve is greater than 85%.

In an embodiment, the percentage of grains of the second group of grains 132' that pass through a 16 mm sieve is 100%. In an embodiment, the percentage of grains of the second group of grains 132' that pass through an 8 mm sieve is greater than 80%. In an embodiment, the percentage of grains of the second group of grains 132' that pass through a 6 mm sieve is 0%.

With reference to the accompanying drawings, the numeral 1 denotes an apparatus for the production of a cementitious conglomerate for building construction. In an embodiment, the apparatus comprises a grinding station 2. The grinding station 2 is configured to grind aggregate material to form the plurality of grains 13'. In an embodiment, the grinding station 2 is configured to grind tiles of ceramic material 13A to form the plurality of grains 13 of ceramic material (fired or stoneware).

In an embodiment, the grinding station 2 is configured to grind aggregate material to form a first group of grains 131' and a second group of grains 132'. In an embodiment, the grinding station 2 comprises a first grinder 21 and a second grinder 22. The first grinder 21 is configured to grind the aggregate material 13 to form the first group of grains 131'. The second grinder 22 is configured to grind the aggregate material 13 to form the second group of grains 132'.

In an embodiment, the apparatus 1 comprises a pre-mixer, configured to mix the first groups of grains 131' with the second group of grains 132'.

In an embodiment, the apparatus 1 comprises a mixer 3.

The mixer 3 comprises a first access, through which the first group of grains 131' is conveyed into the mixer 3. The mixer 3 comprises a second access, through which the second group of grains 132' is conveyed into the mixer 3. In an embodiment, the first and the second access may coincide.

In an embodiment, the mixer 3 comprises a third access, through which the water 12 is conveyed into the mixer 3.

In an embodiment, the mixer 3 comprises a fourth access, through which the binder 11 is conveyed into the mixer 3.

In an embodiment, the mixer 3 comprises an outlet 31, through which the cementitious conglomerate 10 is delivered to the user.

According to an aspect of it, this disclosure also provides a method for making a cementitious conglomerate (or premixed cementitious composite) for building construction.

The method comprises a step F11 of providing a binder, preferably cement 11. The method comprises a step F12 of providing water. The method comprises a step F13 of providing an aggregate. In an embodiment, the step F13 of providing an aggregate is a step of providing ceramic tiles 13A (alternatively fired ceramic tiles, alternatively stoneware ceramic tiles).

In an embodiment, the method comprises a step F2 of grinding. In the step F2 of grinding, the ceramic tiles 13A are ground down to form a plurality of grains 13'.

In an embodiment, the method comprises a step F2' of sorting in which the plurality of grains 13' is sorted, that is. processed to distinguish one part of them from another. In the step F2' of sorting, the plurality of grains 13' is sorted to form a first group of grains 131' having a first grain size and a second group of grains 132' having a second grain size.

In an embodiment, the step F2' of sorting comprises a step of sieving in which the plurality of grains 13' is sieved through a sieve, preferably a vibro sieve. In the step of sieving, the plurality of grains 13' is distinguished as a function of the grain size of the grains 13' to separate the first group of grains 131' from the second group of grains 132'. In an embodiment, the step of sieving comprises a first step F21' of sieving and a second step F22' of sieving. In the first step F21' of sieving, the plurality of grains 13' is sieved through a vibro sieve having a sieve with a first mesh diameter to form the first group of grains 131'.

In the second step F22' of sieving, the plurality of grains 13' is sieved through a vibro sieve having a sieve with a second mesh diameter to form the second group of grains 132'.

In an embodiment, the step F2' of sorting comprises a first step F21 of grinding and a second step F22 of grinding.

In the first step F21 of grinding, the plurality of grains 13' is further ground down to form a first group of grains 131' having a first grain size. In the second step F22 of grinding, the plurality of grains 13' is further ground down to form a second group of grains 132' having a second grain size. In an embodiment of the method, the first grain size is smaller than the second grain size.

In an embodiment, the step F2' of sorting comprises a single further step of grinding which is carried out in series with the step F2 of grinding. In short, in the step F2 of grinding of this embodiment, the ceramic tiles are crushed down to a grain size equal to the second grain size. Next, through the further step of grinding, a part (the first group of grains) of the plurality of grains 13' is ground down further to reach the first grain size.

In an embodiment, the method comprises a step F3 of rounding. In the step F3 of rounding, the plurality of grains 13' is subjected to a machine process to blunt the sharp edges of each grain. In an embodiment, the step F3 of rounding comprises a step of rounding for each of the first group of grains 131' and second group of grains 132'. In an embodiment, the step of rounding is a step of tumbling.

In an embodiment, the method comprises a step of conveying. In the step of conveying, the binder 11, the water 12 and the plurality of grains 13' (that is, the first group of grains 131' and/or second group of grains 132') are conveyed to a mixer 3.

In an embodiment, the method comprises a step F4 of mixing. In the step F4 of mixing, the binder 11, the water 12 and the plurality of grains 13' (that is, the first group of grains 131' and/or second group of grains 132') are mixed in the mixer 3.

In the step of mixing, a plurality of chemical additives - for example, fluidizers of an acrylic nature - are mixed into the conglomerate.

The following paragraphs, listed in alphanumeric order for reference, are non-limiting example modes of describing this invention.
A00. A cementitious conglomerate (10) for building construction, comprising:
   - a binder (11);
   - an aggregate (13) comprising a plurality of grains (13') of an inert material, characterized in that the inert material (13) is a ceramic material.
A01. The conglomerate (10) according to paragraph A00, wherein the inert material (13) is fired ceramic material.
A02. The conglomerate (10) according to paragraph A01, wherein the inert material (13) is stoneware.
A03. The conglomerate (10) according to any one of paragraphs A00 to A02, wherein the binder is bitumen.
A03. The conglomerate (10) according to any one of paragraphs A00 to A02, wherein the binder is a polymeric material or resin.
A04. The conglomerate (10) according to any one of paragraphs A00 to A03, wherein the aggregate is based on ceramic grains (in the sense that the ceramic grains make up all or most of the aggregate).
B00. A premixed composite, comprising:
   - a binder (11) configured to be bound with water;
   - an aggregate (13) comprising a plurality of grains (13') of an inert material, characterized in that the inert material (13) is a ceramic material.
B01. The composite according to paragraph B00, wherein the inert material (13) is fired ceramic material.
B02. The composite according to paragraph B01, wherein the inert material (13) is stoneware.
B03. The composite according to any one of paragraphs B00 to B02, wherein the plurality of grains (13') includes a first group of grains (131') having a first grain size and a second group of grains (132') having a second grain size, larger than the first grain size.
B04. The composite according to paragraph B03, wherein the first grain size is less than 6 mm and the second grain size is between 6 and 16 mm.
B05. The composite according to paragraph B03 or B04, wherein the first group of grains (131') has a first water absorption coefficient and the second group of grains (132') has a second water absorption coefficient, lower than the first water absorption coefficient.
B06. The composite according to paragraph B05. wherein the first water absorption coefficient is higher than 0.90% and the second water absorption coefficient is higher than 0.65%.
B07. A conglomerate for making asphalts, comprising:
   - water;
   - a composite according to any one of paragraphs B00 to B06, wherein the binder is a bitumen.
B08. A conglomerate for making cements, mortars and/or concretes, comprising:
   - water;
   - a composite according to any one of paragraphs B00 to B06, wherein the binder is cement.
B09. A conglomerate for making varnishes and/or paints, comprising:
   - water;
   - a composite according to any one of paragraphs B00 to B06, wherein the binder is a polymeric material or an acrylic material or an organic material.
B10. A conglomerate for making plastics with dispersed mineral fillers, comprising:
   - water;
   - a cementitious composite according to any one of paragraphs B00 to B06, wherein the binder is a polymeric material.
B10. A conglomerate for making glues or adhesives, comprising:
   - water;
   - a cementitious composite according to any one of paragraphs B00 to B06, wherein the binder is a polymeric, acrylic and/or organic material.
C00. Use of tiles (13A) or semi finished tiles of ceramic material to form an inert material (13) in cementitious conglomerates for building construction.
D00. Use of tiles (13A) or semi finished tiles of ceramic material to form an inert material (13) in concretes, mortars or bitumens.
E00. Use of tiles (13A) or semi finished tiles of ceramic material to form an inert material (13) for the production of paints and/or varnishes.
F00. Use of tiles (13A) or semi finished tiles of ceramic material to form an inert material (13) for the production of plastics charged with mineral fillers.
G00. Use of tiles (13A) or semi finished tiles of ceramic material to form an inert material (13) for the production of glues and/or adhesives.

In effect, this disclosure provides both a cementitious conglomerate 10 for building construction and an apparatus 1 for making the cementitious conglomerate 10.

The cementitious conglomerate 10 includes a binder 11. In an embodiment, the binder 11 is cement. The cementitious conglomerate 10 includes water 12.

The cementitious conglomerate 10 comprises an aggregate 13. In an embodiment, the aggregate 13 comprises a plurality of grains 13'. In an embodiment, the conglomerate includes one or more chemical additives.

In an embodiment, the aggregate 13 includes ceramic material. In an embodiment, the aggregate 13 includes fired ceramic material. In an embodiment, the aggregate 13 includes stoneware. In an embodiment, the aggregate 13 includes fired ceramic material derived from ceramic tiles 13A. In an embodiment, the aggregate 13 includes fired ceramic material derived from ceramic stoneware tiles 13A.

In an embodiment, the cementitious conglomerate comprises a filler material 141, better known in the trade simply as "filler".

The filler material 141 allows modifying in a controlled and programmed manner not only the rheological aspects of the cementitious pastes (conglomerates), connected with their viscosity, but also the physical and mechanical aspects connected, above all, with improving the transition zone and with a more compact, hence more resistant. microstructure.

In other words, the filler material 141 is able to modify the rheology of a concrete to improve its cohesiveness, hence to greatly reduce the risk of segregation.

In an embodiment, the filler material 141 is made from a corresponding inert material. In an embodiment, the inert material from which the filler material 141 is made is a ceramic material, preferably fired. In an embodiment, the inert material from which the filler material 141 is made is stoneware.

The filler material 141 is a finely ground material.

More specifically, the filler material 141 has a grain size preferably less than 0.063 mm: that is, it passes through a 0.063 mm sieve.

The grain size requirements for the filler material 141, defined by UNI EN 12620, are the following:
- percentage that passes through a 2 mm sieve is 100%: that is to say, none of the grains of the filler material 141 is larger than 2 mm in size;
- percentage that passes through a 0.125 mm sieve is greater than 85%: that is to say, 85% of the grains of the filler material 141 is smaller than 0.125 mm in size;
- percentage that passes through a 0.063 mm sieve is greater than 70%: that is to say, 70% of the grains of the filler material 141 is smaller than 0.063 mm in size.

Besides the foregoing definition, this disclosure provides a solution where, in the granulometric curve CG of the filler material, the percentage of the filler that passes through a 1.5 mm sieve is 100%. Further, the percentage of grains smaller than 0.063 mm in size is between 60% and 95%, preferably between 75% and 90%.

In an embodiment of this disclosure, the filler material 141 has one or more of the following properties:
- Water absorption values between 0.4 - 0.7%, according to the test requirements set out in EN 1097-6; the absorption values are very low and the porosity considerably reduced;
- Los-Angeles values L.A.21, according to the test requirements set out in EN 1097-2, for assessing the strength and hardness of the material;
- Density, excluding porosity, equal to 2.552 Mg/m³, according to the test requirements set out in EN 196-6;
- Specific surface area of the filler material, determined according to UNI EN 196-6, lies in the interval between 3000 and 7000 cm²/g: for example (and preferably) it is 5114 cm²/g;
- Residual humidity of the filler material in the final product MUST be less than or equal to 0.02%.

The filler material 141 according to this disclosure shows a latent hydraulicity which the filler material 141 shows in combination with hydraulic binders.

It should be remembered that this disclosure also intends protecting one or more of the following uses of the filler material:
- use of the filler material 141 in the production of cementitious conglomerates;
- use of the filler material 141 in the production of bituminous conglomerates;
- use of the filler material 141 in the production of varnishes and paints;
- use of the filler material 141v in the production of glues and adhesives;
- use of the filler material 141 in the production of plastics charged with minerals.

In an embodiment, the binder is a hydraulic binder, a bitumen or a polymeric binder or a resin-based binder. In addition, the binder might also be of an organic nature.

According to an aspect of it, this disclosure also intends providing a method for making a filler material 141. In an embodiment, the method is a method for recycling waste sludge 143 for making the filler material 141. In effect, in the ceramic tile processing industry, some of the processes performed on the tiles, such as cutting or grinding, for example, produce a certain amount of fine dust, which is collected by dispersion in water. This dust, mixed with water, produces the sludge 143, whose recycling is not economically sustainable for the ceramic processing industry.

The method of this disclosure comprises a step FA1 of collecting the sludge 143. In the step FA1 of collecting, the sludge 143 is collected in storage containers S.

The method comprises a step FA2 of dehydrating. In the step FA2 of dehydrating, the sludge 143 is dehydrated to obtain therefrom a first ceramic powder 142. The first ceramic powder 142 has a first grain size.

In an embodiment, the method comprises a step FA4 of filtering. In the step FA4 of filtering, the sludge 143 is passed through a filter press FP which filters it. Downstream of the filter press FP, the powder dispersed in the sludge 143 has a predetermined size, determined by the specifications of the filter press FP.

In an embodiment, the step FA2 of dehydrating is a step of drying, in which the sludge 143 is left to dry in a natural manner and/or in a controlled manner for a predetermined length of time, in order to derive the first ceramic powder 142 from it.

In an embodiment, the method comprises a step FA3 of grinding. In the step FA3 of grinding, the first ceramic powder 142 is further ground to obtain a second ceramic powder 141, having a predetermined grain size, preferably between 0.063 mm and 0.125 mm.

In an embodiment, the step FA3 of grinding is accomplished using specific cylinder mills, adjusted to obtain the predetermined grain size.

In an embodiment, the method comprises a step FA5 of sieving.

In the step of sieving, the second ceramic powder 141 is sieved through specific sieves to remove any grain residues of non-standard size. After the step of sieving, the filler material 141 is ready to be mixed to form a cementitious and/or bituminous conglomerate or a composite (preparation) for varnishes, lacquers, enamels, paints, glues or stuccoes.

In a further embodiment of it, the method for making a filler material 141 involves using ceramic tiles, preferably at the pre-consumer stage (that is to say, before they are installed, meaning that they are not recycled tiles).

This embodiment of the method comprises a step of grinding, starting from the tiles, until the desired grain size is obtained.

Since the predetermined grain size is very fine, the step of grinding may be carried out progressively in successive steps. This embodiment of the method also comprises a step of sieving the grains so that the filler material 141 will not include particles of non-standard size.

The method comprises a step of separating the ground filler material 141. Through the step of separating, it is possible to control the fineness of the filler material 141.

Lastly, the method comprises a step of ensiling, in which the filler material 141 is stored, ready for use, in specific silos.

Alternatively, the filler material 141 may be packed into individual packages of different sizes: for example, large bags, to be transported and used in different applications.

The following paragraphs, listed in alphanumeric order for reference, are non-limiting example modes of describing this invention.
H00. A method for making a filler material for a composite, the filler material constituting a mineral filler in the composite, using sludge (143) from the processing of tiles, the method including the following steps:
   - collecting the waste sludge (FA1);
   - (FA2) dehydrating the waste sludge to obtain a filler material (141).
H01. The method according to paragraph H00, comprising a step (FA4) of filtering, wherein the sludge is obtained through a filter press (FP) which processes a mixture of the dust and water derived from the cutting of the ceramic material.
H02. The method according to paragraphs H00 and H01, wherein the step (FA2) of dehydrating is a step of drying, accomplished by exposing the sludge (143) to a temperature above 80°C and to controlled ventilation.
H03. The method according to any one of paragraphs H00 to H02, comprising a step (FA3) of grinding, wherein the dried sludge (142) is ground down to a grain size of less than 2 mm.
H04. The method according to any one of paragraphs H00 to H03, comprising a step (FA5) of sieving, wherein the dehydrated sludge (142) is sieved to remove any grains greater in size than a predetermined grain size.
H05. The method according to any one of paragraphs H00 to H04, wherein the conglomerate is a cementitious conglomerate for building construction.
100. Use of sludge from the processing of ceramic tiles to form a filler material (141) in a composite.
101. The use according to paragraph I00, wherein the composite is a cementitious conglomerate for building construction, or a bituminous conglomerate, or a composite for varnishes, paints, glues or adhesives.
L00. A conglomerate (10) for building construction, comprising:
   - water;
   - a binder configured to be bound with the water;
   - an aggregate of an inert material;
   - a filler, including a plurality of grains of a filler material (141), wherein the plurality of grains of the filler material (141) has a grain size of less than 2 mm, characterized in that the filler material (141) is a ceramic material.
L01. The conglomerate (10) according to paragraph L00, wherein the filler material (141) is fired ceramic material.
L02. The conglomerate according to paragraph L00 or paragraph L01, wherein the plurality of grains includes a first group of grains having a first grain size of less than 0.063 mm and a second group of grains having a respective second grain size, between 0.063 mm and 2 mm.
L03. The conglomerate according to any one of paragraphs L00 to L01, wherein the grain size of the plurality of grains of the filler material (141) is less than 1.5 mm.
L04. The conglomerate according to any one of paragraphs L00 to L02, wherein the filler material (141) has a density less than or equal to 3 Mg/m³.
L05. The conglomerate (10) according to any one of paragraphs L00 to L04, wherein the grains of the plurality of grains (13') of the filler material (141) are made from ceramic tile process waste material.
M00. A composite comprising:
   - a binder (11) configured to be bound with water;
   - an aggregate (13) of an inert material;
   - a filler, including a plurality of grains of a filler material (141), wherein the plurality of grains of the filler material (141) has a grain size not greater than 2 mm;
characterized in that the filler material (141) is a ceramic material.

## Claims

1. A cementitious conglomerate (10) for building construction, comprising:
- water (12);
- a binder (11) configured to be bound with the water;
- an aggregate (13) including a plurality of grains (13') of an inert material,
**characterized in that** the inert material (13) is a ceramic material.

2. The conglomerate (10) according to claim 1, wherein the inert material (13) is fired ceramic material.

3. The conglomerate (10) according to claim 2, comprising a filler, including a plurality of grains of a filler material (141), the filler material constituting a mineral filler in the composite itself, wherein the plurality of grains of the filler material (141) has a grain size of less than 2 mm, the filler material (141) being a ceramic material.

4. The conglomerate (10) according to any one of the preceding claims, wherein the plurality of grains (13') includes a first group of grains (131') having a first grain size and a second group of grains (132') having a second grain size, larger than the first grain size.

5. The conglomerate (10) according to claim 4, wherein the first grain size is less than 6 mm and the second grain size is between 6 and 16 mm.

6. The conglomerate (10) according to claim 4 or 5, wherein the first group of grains (131') has a first water absorption coefficient and the second group of grains (132') has a second water absorption coefficient, lower than the first water absorption coefficient.

7. The conglomerate (10) according to claim 6. wherein the first water absorption coefficient is higher than 0.90% and the second water absorption coefficient is higher than 0.65%.

8. The conglomerate (10) according to any one of the preceding claims, wherein the grains of the plurality of grains (13') are ground tiles or crushed semi finished tiles.

9. The conglomerate (10) according to any one of the preceding claims, wherein the aggregate (13) includes a further plurality of grains of a material of natural origin.

10. Use of tiles (13A) or semi finished tiles of ceramic material to form an inert material (13) in a cementitious conglomerate for building construction.

11. Use according to claim 10, wherein the tiles (13A), in which sludge derived from the processing of ceramic tiles are used, to form a filler material (141) in the conglomerate.

12. A method for making a cementitious conglomerate (10) for building construction, including the following steps:
- (F2) grinding ceramic tiles (13A) or semi finished ceramic tiles to obtain a plurality of grains (13') forming an aggregate (13);
- (F4) mixing the aggregate (13) comprising the plurality of grains (13') with water (12) and with a binder (11).

13. The method according to claim 12, wherein the ceramic tiles (13A) or semi finished ceramic tiles are derived from the industrial production of ceramic tiles and are ground before they are installed or used as cladding.

14. The method according to claim 13, comprising the following steps:
- (FA1) collecting the waste sludge (143) starting from the sludge derived from the processing of the tiles;
- (FA2) dehydrating the waste sludge to obtain a filler material (141), the filler material constituting a mineral filler in the conglomerate.

15. The method according to any one of claims 12 to 14, comprising a step (F2') of sorting in which the plurality of grains is sorted to form a first group of grains (131') having a first grain size and a second group of grains (132') having a second grain size, larger than the first grain size.
